Europäisches Patentamt

European Patent Office

Office européen des brevets

(11) Veröffentlichungsnummer : **0 075 662
B1**

(12) **EUROPÄISCHE PATENTSCHRIFT**

(45) Veröffentlichungstag der Patentschrift :
**09.10.85**

(51) Int. Cl.⁴ : **C 25 B   1/26,** C 25 B   9/00,
**C 02 F   1/46**

(21) Anmeldenummer : **82106197.5**

(22) Anmeldetag : **10.07.82**

(54) **Elektrolysezelle zur Erzeugung von Hypochloritlösung.**

(30) Priorität : **26.09.81 DE 3138438**

(43) Veröffentlichungstag der Anmeldung :
**06.04.83 Patentblatt 83/14**

(45) Bekanntmachung des Hinweises auf die Patenterteilung : **09.10.85 Patentblatt 85/41**

(84) Benannte Vertragsstaaten :
**AT BE CH DE FR GB IT LI NL SE**

(56) Entgegenhaltungen :
**AT-B-   152 804
CH-A-   174 466
DE-A- 2 749 969
DE-A- 2 757 854
DE-A- 2 832 664
DE-A- 2 922 275**

(73) Patentinhaber : **W.C. Heraeus GmbH
Heraeusstrasse 12 - 14
D-6450 Hanau / Main (DE)**

(72) Erfinder : **Fabian, Peter
Theodor-Heuss-Strasse 4
D-6463 Freigericht 1 (DE)**
Erfinder : **Gündling, Manfred
Am Lindenplatz 4
D-8755 Alzenau 4 (DE)**
Erfinder : **Rössler, Peter
Büdinger Strasse 5
D-6451 Ronneburg 1 (DE)**

(74) Vertreter : **Heinen, Gerhard, Dr.
W.C. Heraeus GmbH Zentralbereich Patente und
Lizenzen Heraeusstrasse 12-14
D-6450 Hanau (DE)**

## Beschreibung

Die Erfindung betrifft eine Elektrolysezelle zur Erzeugung einer wässrigen Lösung von Natriumhypochlorit durch Elektrolyse einer Natriumchloridlösung zur Sterilisation von Trinkwasser, Brauchwasser, Abwasser und Kühlwasser in einem von zu behandelndem Wasser durchströmten Leitungssystem, in dem ein Rohrstück als Zellengehäuse mit einem Zulauf und mit parallel und mit Abstand zueinander angeordneten Anoden und Kathoden dient.

Hypochlorite sind unter Einwirkung von Licht nicht sonderlich stabil, das heißt, sie zersetzen sich relativ schnell, so daß eine Herstellung zum sofortigen Verbrauch in der gewünschten Menge pro Zeiteinheit sehr vorteilhaft ist.

Es sind Elektrolysezellen der in Rede stehenden Art bekannt, üblicherweise sind dabei Anoden- und Kathodenraum durch ein Diaphragma oder eine Membrane getrennt. Aus der DE-OS 29 22 275 ist eine Elektrolysezelle ohne Diaphragma bekannt, die einen zylindrischen Zellenbehälter besitzt, der poröse plattenförmige Kathoden enthält. Der Zellenbehälter ist mit seinem diametral gegenüberliegenden Enden durch Flanschverbindungen an ein Leitungssystem, welches das zu behandelnde Wasser führt, angeschlossen. Ein Ausbau des Zellenbehälters ist nur im drucklosen Zustand des Systems möglich, so daß bei einem wartungsgemäßen Austausch der Elektroden das gesamte System außer Betrieb genommen werden muß. Gemäß Seite 11, Absatz 2 der genannten Offenlegungsschrift muß bei dieser Zelle eine hohe Salzkonzentration angewendet werden, die durch die poröse Anode gedrückt wird. Wie Tabelle 11 zeigt, ist ein relativ hoher Druck nötig und die Zelle ist nicht für jeden Anwendungszweck gleichgut geeignet.

Aufgabe der Erfindung ist es eine Zelle zu schaffen, die trotz einfachem Aufbau und guter Wartungsmöglichkeit eine leichte Anpassung an den jeweils gewünschten Verwendungszweck ermöglicht.

Gelöst wird diese Aufgabe durch die im Anspruch 1 enthaltenen Merkmale. Weitere Ausgestaltungen der Erfindung sind den Unteransprüchen zu entnehmen.

Die Vorteile der Erfindung sind :

1. Eine kompakte Bauweise, die z. B. den Einbau in ein aus handelsüblichen Kunststoffen bestehendes Rohrleitungssystem gestattet. Der Einbau der Zelle in das Rohrleitungssystem kann dabei entweder direkt oder im Nebenschluß erfolgen.

2. Das Elektrodenpaket kann durch seine kartuschenartige Ausbildung bzw. Befestigung an einer Kappe leicht gewechselt werden, ohne daß hierzu mehrere Teile der Zelle demontiert werden müssen. Dies gestattet eine leichte Reaktivierung einzelner Elektroden oder des gesamten Paketes bzw. die Reinigung von Belägen auf den Elektroden, wie z. B. Karbonatbelägen.

3. Die erfindungsgemäße Elektrolysezelle kann sowohl in der Kühlwasser- oder Abwassertechnik verwendet werden, wo es auf hohe Stromausbeute ankommt, als auch im Trinkwasser- oder Badewasserbereich, wo es auf hohe Salzausbeute ankommt.

4. Die erfindungsgemäße Elektrolysezelle zeichnet sich ferner durch hohe Korrosionsbeständigkeit aller Teile aus, sowie durch eine sichere Entgasung des Elektrolyseprodukts, um Explosionsgefahren durch Wasserstoff-Luftgemische zu begegnen.

Ein Ausführungsbeispiel der Erfindung ist in den beigefügten Zeichnungen rein schematisch dargestellt.

Es zeigen :

Figur 1 eine Ansicht eines Rohrleitungssystems mit eingebauter Elektrolysezelle,

Figur 2 einen Schnitt entlang der Linie II-II in Figur 1

Figur 2a einen Schnitt entlang der Linie a-a in Figur 2,

Figur 3 bis Figur 5 Ergebnisse, die beim Betrieb der erfindungsgemäßen Elektrolysezelle erzielt wurden.

Die neue Elektrolysezelle weist ein Rohrstück 1 als Zellengehäuse auf, welches an einem Ende durch eine Endkappe 2 verschlossen ist, die in Form einer Schraubmuffe ausgebildet oder mit einem Flansch versehen sein kann. Am anderen Ende des Rohrstücks 1 ist dieses offen und zum Anschluß an eine Knie 15 ausgebildet. An dieses schließt sich der Ablaufstutzen 4 und ein Entgasungsbehälter 5 an. Der Zulaufstutzen zum rohrförmigen Gehäuse ist mit 3 bezeichnet. Mit 6 ist ein Entgasungsstutzen am Behälter 5 bezeichnet, der oberhalb desselben an diesem, vorzugsweise koaxial befestigt ist, ebenso wie der Stutzen 4. Mit Vorteil sind die genannten Teile 1 bis 6 mit Ausnahme von Teil 2 miteinander verklebt oder verschweißt. Es handelt sich dabei um chlorresistente Kunststoffe, wie handelsüblicher Polyvinylchlorid, nachchloriertes Polyvinylchlorid oder andere chlorresistente Kunststoffteile. Zum Kleben sind handelsübliche PVC-Kleber geeignet und zum Schmelzschweißen der Kunststoffteile das übliche Heißluft-Schweißverfahren.

Wie ersichtlich ist, ist an beiden Enden des Behälters 5, von dessen Zylinder auf die anschließenden Teile, eine Reduzierung im Durchmesser vorhanden. Etwa mittig in der Höhe des Behälters 5 tritt seitlich aus diesem der Auslaufstutzen 14 aus. Er ist durch ein Ventil 13 verschließbar, wie es auch in dem Zulaufstutzen 3 eingebaut sein kann.

Der Behälter 5 ist so dimensioniert, daß die Fließgeschwindigkeit der Flüssigkeitsströmung im Behälter langsamer ist als die Steiggeschwindigkeit der in der Lösung enthaltenen Gasblasen, so daß eine vollständige Entgasung gewährleistet ist.

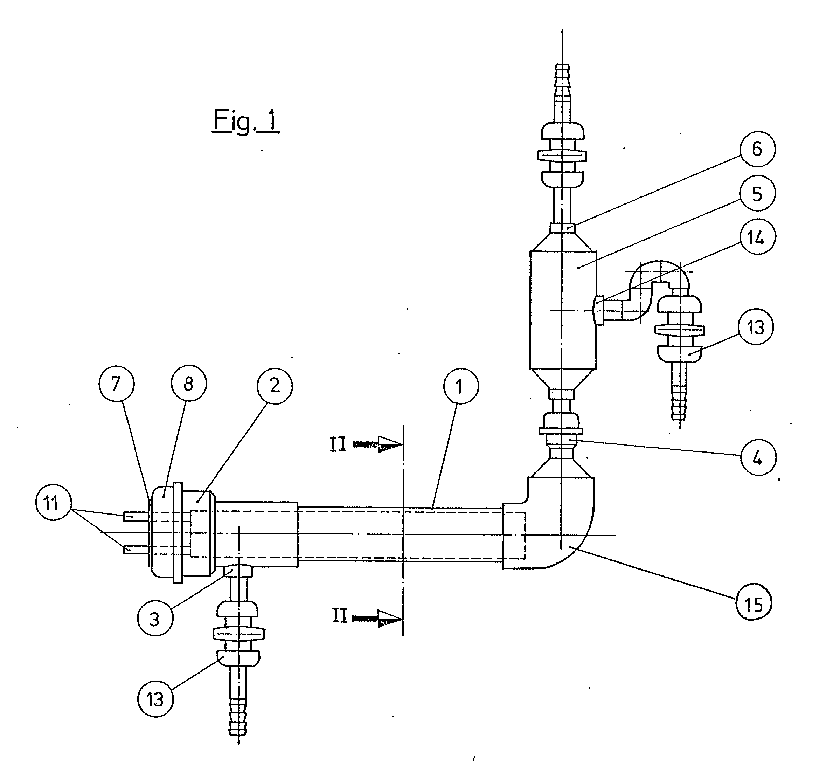

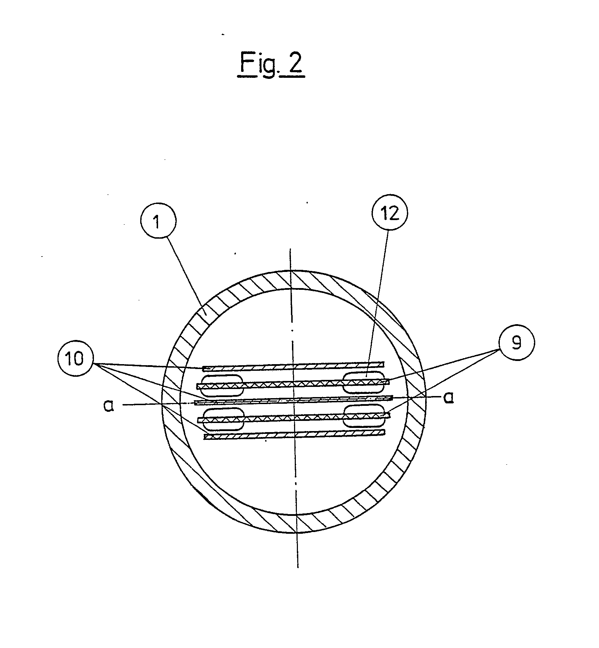

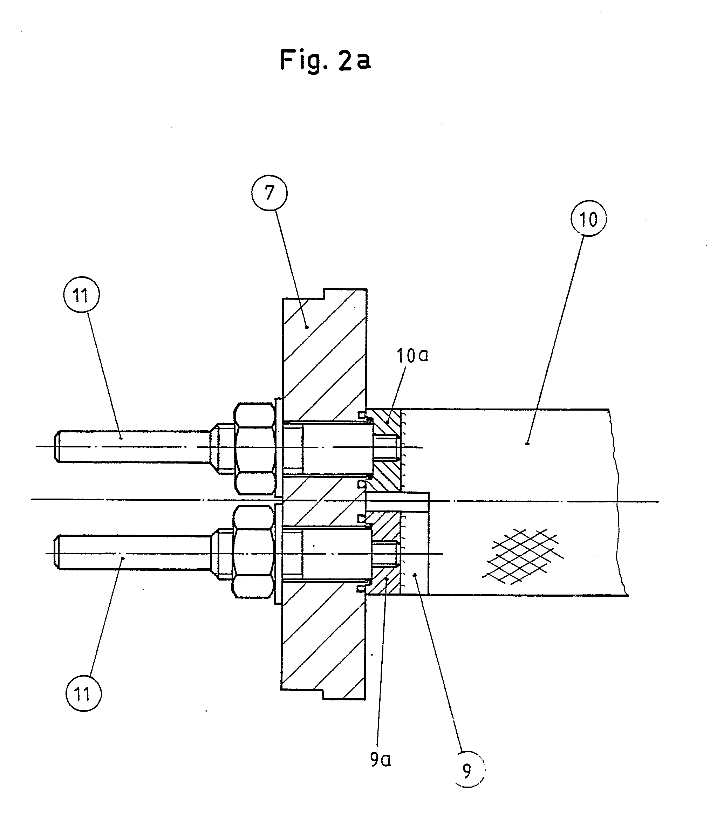

Wie aus Figur 2a ersichtlich ist, besteht der Verteiler aus einer Scheibe 7 aus gleichem Kunststoffmaterial wie das Zellengehäuse 1 gemäß Figur 1. Diese Scheibe ist so ausgebildet, daß sie in die Endkappe 2 bzw. den Verschluß 8 in Form einer Schraubmuffe gemäß Figur 1 paßt. Selbstverständlich kann im Falle der Schraubkappe eine Dichtung, wie ein O-Ring, verwendet werden.

Die Elektroden (Anode und Kathode) sind, wie insbesondere Figur 2 und Figur 2a zeigen, paketartig und senkrecht zur Kappenebene sowie mit Abstand zueinander angeordnet. Die Elektroden sind plattenförmig ausgebildet und werden jeweils senkrecht zur Ebene der Stromzuführungsbolzen 11 auf Verteilerplatten 9a, 10a, die zum Beispiel rechteckig sind, aber auch halbkreisförmig ausgebildet sein können, angeschweißt. Die Anordnung der Elektroden (9, 10) ist so, daß ihre Stirnseiten kammförmig mit der Scheibe 7 verbunden sind.

Ihre Stromzuführungsbolzen 11 sind durch zwei im Flansch vorgesehene Bohrungen gesteckt und die Anoden 9 befinden sich symmetrisch in den Lücken zwischen den Kathoden 10. Dazwischen liegen jeweils Abstandshalter 12, die auf den Anoden 9 befestigt sind und ebenfalls aus Kunststoff bestehen. Die Scheibe 7 wird mit Gewindemuttern gegen den Flansch gezogen und dort abgedichtet.

Die beschriebenen Kathoden 10 mit Stromzuführungsbolzen 11 und Scheibe 7 bestehen aus Metall wie Stahl, rostfreiem Stahl, Stahl mit Nickelüberzug, Titan, Niob, Tantal oder Legierungen dieser Metalle in Form von streifenförmigen Blechplatten, Lochblechen oder Streckmetall mit einer Dicke von 0,5 bis 5 mm, vorzugsweise 1 bis 1,5 mm. Diese Materialauswahl wirkt sich besonders vorteilhaft bei der Verwendung der Elektrolysezelle zur Behandlung von Brauchwasser oder Trinkwasser aus.

Die beschriebenen Anoden 9 mit Stromzuführungsbolzen 11 und die Scheibe 7 bestehen aus einem Metall wie Titan, Niob oder Tantal oder Legierungen dieser Metalle. Sie werden ebenfalls aus streifenförmigen Blechen, Lochblechen oder Streckmetallen dieser Metalle mit einer Dicke von 0,5 bis 5 mm, vorzugsweise 1 bis 1,5 mm hergestellt. Die streifenförmigen Anoden 9 sind mit einer elektrochemisch aktiven Schicht wie Platin, Platinmetalloxide oder Platinmetallmischoxid auch mit Unedelmetalloxiden versehen.

Der Spalt zwischen den plattenförmigen Kathoden 10 und den Anoden 9 ist 0,5 bis 3 mm, vorzugsweise 1 bis 2 mm breit. Um Kurzschlüsse, die bei der Berührung der Kathoden mit den Anoden entstehen können, zu vermeiden, sind die knopf- oder streifenförmigen Abstandshalter 12 aus Polyvinylchlorid vorgesehen.

Ein derartig aufgebautes Elektrodenpaket (Kartusche) bildet eine Einheit, wobei sowohl Kathoden als auch Anoden separat und leicht aus dem Gehäuse herausgenommen und wieder hineingesetzt werden können, gegebenenfalls nach Säuberung und/oder Reaktivierung der Elektroden.

Zum Auswechseln der Elektroden wird die Elektrolysezelle 1 durch die anlagenseitigen Ventile 13 abgesperrt, so daß nach der Lösung der Endkappe 2 mit Flansch oder Verschluß 8 das Elektrodenpaket (Kartusche) zusammen mit der Scheibe 7 und dem Stromzuführungsbolzen 11 als Einheit aus dem Rohrstück 1 gezogen werden können, ohne dieses bzw. die Elektrolytenzu- und -ableitungen demontieren zu müssen.

Durch die beschriebene Anordnung und Ausführung des Elektrodenpakets, in der Art einer Kartusche und der Zelle als Rohrzelle, ergibt sich eine gute Elektrolytdurchmischung während des Betriebs, was zu guten Produktionsergebnissen führt, wie die nachfolgenden Ergebnisse zeigen.

Verfahrenbedingungen :

Medium : $H_2O$ + NaCl
Zellenbelastung : 50 A
Zellenspannung : von 4,12 V bis 6,50 V
Temperatur Sole : von 17,5 °C bis 24 °C
Temperatur Zelle : von 34,5 °C bis 49,5 °C

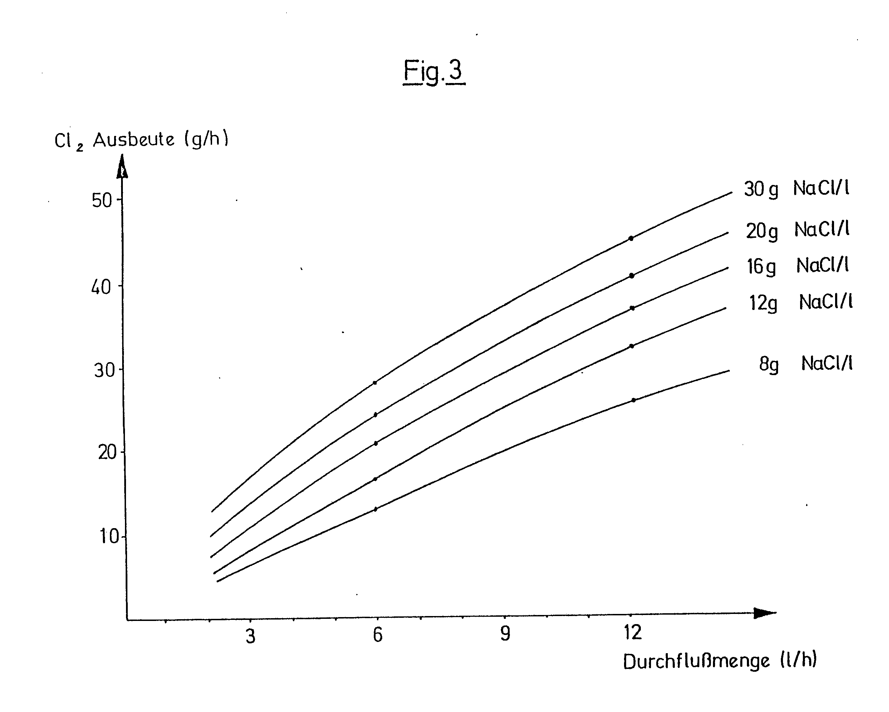

Das Diagramm Figur 3 stellt die $Cl_2$-Ausbeute in g/h über der Durchflußmenge in l/h bei einer konstanten Stromstärke von 50 A und verschiedenen Solekonzentrationen in g/l, die jeweils konstant gehalten wurden, dar.

Die Kurven zeigen, daß mit steigender Durchflußmenge in l/h — das entspricht bei konstanter Solekonzentration einer Erhöhung der Salzeinsatzmenge in g/h — die $Cl_2$-Ausbeute in g/h zunimmt. Die jeweiligen Werte liegen bei gleicher Durchflußmenge umso höher, je höher die Salzkonzentration in g/l und dadurch wiederum die Salzeinsatzmenge in g/h ist.

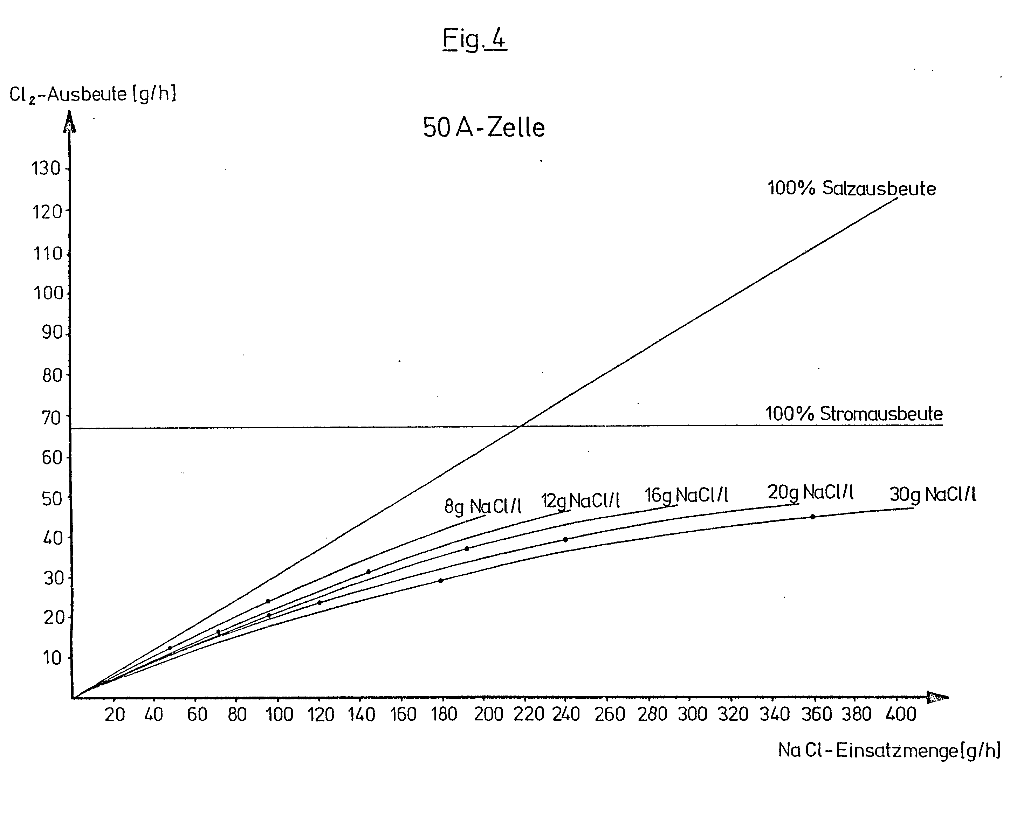

Das Diagramm Figur 4 stellt die $Cl_2$-Ausbeute in g/h über der Salzeinsatzmenge in g/h bei konstanter Stromstärke von 50 A und bei verschiedenen Salzkonzentrationen dar. Eingezeichnet in das Diagramm ist die Gerade für 100 % Stromausbeute, die als waagrechte Gerade verläuft, da der Strom konstant ist, und die Gerade für 100 % Salzausbeute, die kontinuierlich mit zunehmender Salzeinsatzmenge in g/h ansteigt.

Die Kurven zeigen, daß bei gleicher Salzeinsatzmenge die $Cl_2$-Ausbeute in g/h zunimmt, je geringer die Salzkonzentration in g/l ist, was gleichzeitig einer größeren Durchflußmenge in l/h entspricht. Außerdem zeigen die Kurven, daß mit steigender Salzeinsatzmenge in g/h die Stromausbeute zunimmt und gleichzeitig jedoch die Salzausbeute abnimmt.

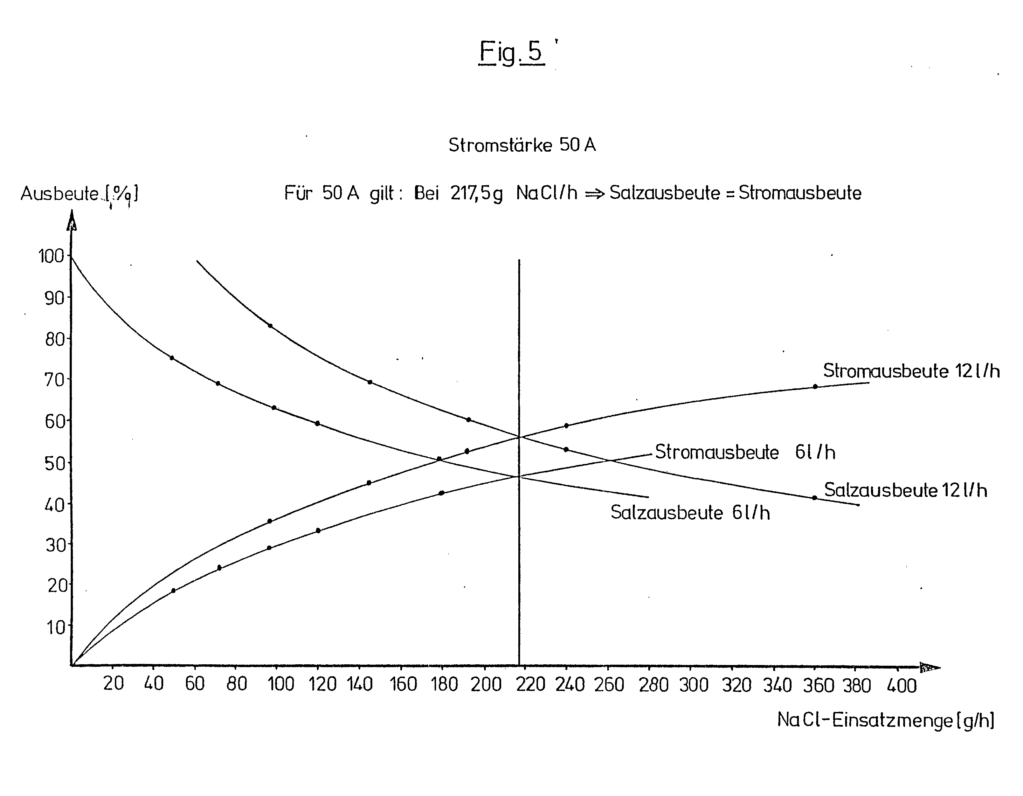

Das Diagramm Figur 5 zeigt die Stromausbeute und Salzausbeute über der Salzeinsatzmenge in g/h bei konstanter Stromstärke von 50 A und konstantem Durchfluß in l/h. Die Kurven zeigen, daß mit zunehmender Salzeinsatzmenge in g/h die Stromausbeute zunimmt und gleichzeitig die Salzausbeute abnimmt. Bei einer Stromstärke von 50 A ist bei einer Salzeinsatzmenge von 217,5 g/h die Stromausbeute gleich der Salzausbeute. Die Werte für Strom- und Salzausbeute liegen umso höher, je größer die Durchflußmenge in l/h

bei gleichbleibender Einsatzmenge ist, was gleichzeitig einer geringen Salzkonzentration in g/l entspricht.

Die in Figur 3-5 dargestellten Ergebnisse zeigen, daß die erfindungsgemäße Elektrolysezelle durch Veränderung der Parameter wie Salzkonzentration, Durchflußmenge usw. den jeweiligen Bedürfnissen des Verwenders angepaßt werden kann, das heißt, eine hohe Salzausbeute, wie sie im Badewasserbereich gewünscht wird, kann erreicht werden durch niedrige Salzkonzentration und hohe Durchflußmenge, eine hohe Stromausbeute kann erreicht werden durch hohe Salzkonzentration und niedrige Durchflußmenge.

## Patentansprüche

1. Elektrolysezelle zur Erzeugung einer wässrigen Lösung von Natriumhypochlorit durch Elektrolyse einer Natriumchloridlösung zur Sterilisation von Trinkwasser, Brauchwasser, Abwasser und Kühlwasser in einem von zu behandelndem Wasser durchströmten Leitungssystem, in dem ein Rohrstück (1) als Zellengehäuse mit einem Zulaufstutzen (3) und mit parallel und mit Abstand zueinander angeordneten Anoden (9) und Kathoden dient, dadurch gekennzeichnet, daß die Elektroden (9, 10) in Form eines Elektrodenpakets von einer Seite axial dicht in eine Rohröffnung des Rohrstücks (1) einsetzbar sind.

2. Elektrolysezelle nach Anspruch 1, dadurch gekennzeichnet, daß das Elektrodenpaket zwei Verteilerplatten (9a, 10a) aufweist mit darauf kammförmig angeordneten Elektroden (9, 10) und rückseitig angeschweißten Stromzuführungsbolzen (11), die durch eine Scheibe (7) und eine Endkappe (2) und/oder Verschluß (8) geführt sind und mit diesen eine Einheit bilden, die lösbar in das Rohrstück (1) eingesetzt ist.

3. Elektrolysezelle nach Anspruch 1 oder 2, dadurch gekennzeichnet, daß das Rohrstück (1) und die Endkappe (2) und/oder der Verschluß (8) aus chlorresistentem Kunststoff bestehen.

4. Elektrolysezelle nach Anspruch 1, 2 oder 3, dadurch gekennzeichnet, daß die dicht in das Rohrstück (1) eingesetzten Elektroden (9, 10) Abstandshalter (12) aus Kunststoff zwischen den einzelnen Elektroden aufweisen.

5. Elektrolysezelle nach Anspruch 1, 2, 3 oder 4, dadurch gekennzeichnet, daß der am Rohrstück (1) befindliche Zulaufstutzen (3) senkrecht zur Achse des Rohrstücks angeordnet ist.

6. Elektrolysezelle nach einem der vorhergehenden Ansprüche, dadurch gekennzeichnet, daß das Rohrstück (1) mit einem Entgasungsbehälter (5), mit Kunststoffwänden, fest verbunden ist, der einen seitlichen Auslaufstutzen (14) und einen oberen Entgasungsstutzen (6) aufweist.

7. Elektrolysezelle nach Anspruch 6, dadurch gekennzeichnet, daß das Rohrstück (1) einen Entgasungsbehälter (5) aufweist, der so dimensioniert ist, daß die Flüßigkeit diesen langsamer durchströmt, als darin vorhandene Gasblasen.

8. Elektrolysezelle nach Anspruch 6 oder 7, dadurch gekennzeichnet, daß der Entgasungsbehälter (5) von Wänden begrenzt ist, die eine zylindrische Behälterform aufweisen und dessen Ablaufstutzen (4) bzw. Entgasungsstutzen (6) demgegenüber im Durchmesser reduziert sind.

9. Elektrolysezelle nach einem der vorhergehenden Ansprüche, dadurch gekennzeichnet, daß das Rohrstück (1), und das Anschlußstück (15, 4, 5) mit Ablauf (bis 14) und Entgasung (bis 6) aus PVC (Polyvinylchlorid) bestehen und diese Teile im wesentlichen handelsübliche Fertigteile sind, die miteinander verklebt oder verschweißt sind.

## Claims

1. Electrolytic cell for production of an aqueous solution of sodium hypochlorite by electrolysis of a sodium chloride solution for sterilisation of potable water, utility water, sewage and cooling water within a piping system traversed by the flow of the water which is to be treated, wherein a pipe section (1) acts as a cell housing having a feed stub (3) and anodes (9) and cathodes (10) arranged mutually parallel and with mutual spacing, characterised in that the electrodes (9, 10) in the form of an electrode unit may be inserted axially and hermetically from one side into a pipe opening of the pipe section (1).

2. Electrolytic cell according to claim 1, characterised in that the electrode unit comprises two distributor plates (9a, 10a) having electrodes (9, 10) arranged on it in the manner of a comb and current supply pins (11) welded to the rear side, which are led through a disc (7) and an end cap (2) and/or closure (8) and form a unit with these which is releasably inserted into the pipe section (1).

3. Electrolytic cell according to claim 1 or 2, characterised in that the pipe section (1) and the end cap (2) and/or the closure (8) are made from plastics material impervious to chlorine.

4. Electrolytic cell according to claim 1, 2 or 3, characterised in that the electrodes (9, 10) hermetically inset within the pipe section (1) comprise spacers (12) of plastics material between the separate electrodes.

5. Electrolytic cell according to claim 1, 2, 3 or 4, characterised in that the feed stub (3) situated on the pipe section (1) is arranged at right angles to the axis of the pipe section.

6. Electrolytic cell according to one of the preceding claims, characterised in that the pipe section (1) is securely connected to a degassing vessel (5) comprising plastics material walls, which comprises a lateral outlet stub (14) and an upper degassing stub (6).

7. Electrolytic cell according to claim 6, characterised in that the pipe section (1) comprises a degassing vessel (5) which is so dimensioned that the liquid flows through it more slowly than gas bubbles present within it.

8. Electrolytic cell according to claim 6 or 7, characterised in that the degassing vessel (5) is delimited by walls which have a cylindrical container shape, its outlet stub (4) and upper degassing stub (6) respectively, being reduced in diameter compared thereto.

9. Electrolytic cell according to one of the preceding claims, characterised in that the pipe section (1) and the connector element (15, 4, 5) comprising an outlet (up to 14) and a degassing means (up to 6) consist of PVC (polyvinylchloride) and that these parts substantially consist of ready-made components available in the trade, which are bonded or welded to each other.

**Revendications**

1. Cellule d'électrolyse pour la production d'une solution aqueuse d'hypochlorite par électrolyse d'une solution de chlorure de sodium pour la stérilisation d'eau potable, d'eau industrielle, d'eau résiduaire et d'eau de refroidissement dans un système de canalisation parcouru par l'eau à traiter, dans lequel un morceau de tube (1) sert d'enveloppe de cellule avec un ajutage d'arrivée (3) et avec des anodes (9) et des cathodes (10) disposées parallèlement et à distance les unes des autres, caractérisée en ce que les électrodes (9, 10) sous forme d'un empilement d'électrodes, peuvent être introduites dans une ouverture du morceau du tube (1) axialement de manière étanche depuis une extrémité.

2. Cellule d'électrolyse selon la revendication 1, caractérisée en ce que l'empilement d'électrodes présente deux plaques de distribution (9a, 10a) avec des électrodes (9, 10) disposées en forme de peigne sur celles-ci et des broches d'amenée de courant (11) soudées à la face arrière, qui sont enfoncées à travers une plaque (9) et un capuchon d'extrémité (2) et/ou un obturateur (8) et forment avec ceux-ci une unité qui est enfoncée de manière amovible dans le morceau de tube (1).

3. Cellule d'électrolyse selon la revendication 1 ou 2, caractérisée en ce que le morceau de tube (1) et le bouchon d'extrémité (2) et/ou l'obturateur (8) consistent en matière plastique résistante au chlore.

4. Cellule d'électrolyse selon la revendication 1, 2 ou 3, caractérisée en ce que les électrodes (9, 10) introduites de manière étanche dans le morceau de tube (1) présentent chaque fois des cales (12) en matière plastique entre les électrodes individuelles.

5. Cellule d'électrolyse selon la revendication 1, 2, 3 ou 4, caractérisée en ce que l'ajutage d'arrivée (3) sur le morceau de tube (1) est disposé perpendiculairement à l'axe du tube.

6. Cellule d'électrolyse selon l'une quelconque des revendications précédentes, caractérisée en ce que le morceau de tube (1) est relié solidement à un récipient de dégazage (5), à parois en matière plastique, qui présente un ajutage latéral de sortie (14) et un ajutage de dégazage supérieur (6).

7. Cellule d'électrolyse selon la revendication 6, caractérisée en ce que le morceau de tube (1) comporte un récipient de dégazage (5) dimensionné de telle sorte que le liquide traverse celui-ci plus lentement que les bulles de gaz qu'il contient.

8. Cellule d'électrolyse selon la revendication 6 ou 7, caractérisée en ce que le récipient de dégazage (5) est limité par des parois qui présentent une forme de récipient cylindrique et dont l'ajutage de sortie (4) et l'ajutage de dégazage (6) ont un diamètre réduit par rapport à celui-ci.

9. Cellule d'électrolyse selon l'une des revendications précédentes, caractérisée en ce que le morceau de tube (1) et la pièce de raccordement (15, 4, 5) avec sortie (jusqu'à 14) et dégazage (jusqu'à 6) consistent en PVC (chlorure de polyvinyle) et en ce que ces pièces sont essentiellement des pièces finies du commerce, qui sont collées ou soudées entre elles.

**Fig. 1**

# Fig. 2

# Fig. 2a

Fig.3

Cl$_2$ Ausbeute (g/h)

Durchflußmenge (l/h)

30 g  NaCl/l
20g  NaCl/l
16g  NaCl/l
12g  NaCl/l
8g  NaCl/l

0 075 662

Fig. 4

50 A-Zelle

Cl$_2$-Ausbeute [g/h]

100% Salzausbeute

100% Stromausbeute

8g NaCl/l    12g NaCl/l    16g NaCl/l    20g NaCl/l    30g NaCl/l

Na Cl-Einsatzmenge [g/h]

0 075 662

# Fig. 5

Stromstärke 50 A

Für 50 A gilt : Bei 217,5g NaCl/h ⇒ Salzausbeute = Stromausbeute

Ausbeute [%]

Stromausbeute 12 l/h

Stromausbeute 6 l/h

Salzausbeute 12 l/h

Salzausbeute 6 l/h

NaCl-Einsatzmenge [g/h]

0 075 662